# EUROPÄISCHE PATENTSCHRIFT

(11) **EP 1 347 995 B1**
(45) Veröffentlichungstag und Bekanntmachung des Hinweises auf die Patenterteilung: **29.03.2006**
(21) Anmeldenummer: 01994776.1
(22) Anmeldetag: 11.12.2001
(51) Int. Cl.: C08F 10/10, C08F 4/00, C08F 4/12, C08F 4/16, C08F 4/44

(54) **VERFAHREN ZUR HERSTELLUNG VON HOMO- UND COPOLYMEREN DES ISOBUTENS**
METHOD FOR PRODUCING HOMOPOLYMERS AND COPOLYMERS OF ISOBUTENE
PROCEDE DE PRODUCTION D'HOMOPOLYMERES ET DE COPOLYMERES D'ISOBUTENE

(30) Priorität: 12.12.2000 DE 10061715
(43) Veröffentlichungstag der Anmeldung: 01.10.2003
(73) Patentinhaber: BASF Aktiengesellschaft, 67056 Ludwigshafen (DE)
(72) Erfinder: HÜFFER, Stephan, 67063 Ludwigshafen (DE); RATH, Hans, Peter, 67269 Grünstadt (DE); LANG, Gabriele, 68167 Mannheim (DE)
(74) Vertreter: Pohl, Michael Friedrich
(86) Internationale Anmeldenummer: PCT/EP2001/014546
(87) Internationale Veröffentlichungsnummer: WO 2002/048216

(56) Entgegenhaltungen:
- EP-A- 0 713 883
- EP-A- 0 722 957
- US-A- 5 247 021
- US-A- 5 902 919

## Beschreibung

Die vorliegende Erfindung betrifft ein Verfahren zur Herstellung von Homo- und Copolymeren des Isobutens durch kationische Polymerisation von Isobuten oder Mischungen von Isobuten mit ethylenisch ungesättigten Comonomeren, die unter den Bedingungen einer kationischen Polymerisation mit Isobuten copolymerisieren.

Polyisobuten und seine Copolymere finden in vielfältiger Weise Verwendung, beispielsweise zur Herstellung von Kraftstoff- und Schmierstoff-Additiven, als Elastomere, als Klebestoffe oder Kleberohstoffe, als Grundbestandteil von Dichtungs- und Versiegelungsmassen, in Beschichtungssystemen, insbesondere solchen mit einer Barrierewirkung für Wasserdampf sowie in Kaugummimassen. Blockcopolymere des Isobutens mit vinylaromatischen Monomeren zeichnen sich beispielsweise durch ihre Elastomer-Eigenschaften und ihre hohe Dichtigkeit gegenüber der Permeation von Gasen aus.

Die kationische Polymerisation von Isobuten erfolgt häufig durch Bortrifluorid-Katalyse, insbesondere durch Polymerisation von Isobuten in Gegenwart von Bortrifluorid-Komplex-Katalysatoren. Verfahren hierzu sind im Stand der Technik umfassend beschrieben (siehe beispielsweise DE-A 27 02 604, EP-A 145 235, EP-A 481 297, EP-A 671 419, EP-A 628 575, EP-A 807 641 und WO 99/31151).

Kennedy et al. beschreibt die Homo- und Copolymerisation von Isobuten unter den Bedingungen einer sogenannten "lebenden kationischen Polymerisation" (siehe J.P. Kennedy et al, in US 4,946,899, US 4,327,201, US 5,169,914, EP-A 206 756, EP-A 265 053, sowie umfassend in J.P. Kennedy, B. Ivan, "Designed Polymers by Carbocationic Macromolecular Engineering", Oxford University Press, New York 1991). Das zur kationischen Polymerisation eingesetzte Initiatorsystem umfasst in der Regel wenigstens ein Lewis-saures Metallhalogenid als Katalysator und wenigstens eine organische Verbindung, die mit der Lewis-Säure unter den Reaktionsbedingungen ein Carbokation oder einen kationogenen Komplex bildet. Obwohl die "lebende kationische Polymerisation" zu Polymerisaten mit erhöhter molekularer Einheitlichkeit führt und überdies im Unterschied zur Bortrifluorid-Komplex-Katalyse auch die gezielte Herstellung von Blockcopolymeren und von terminal funktionalisierten Polymeren erlaubt, hat sie bislang nur akademische Bedeutung erlangt. Dies ist vermutlich auf ihre schwierige Beherrschbarkeit und ihre hohe Anforderung an die Reinheit der eingesetzten Reagenzien zurückzuführen.

Verschiedentlich wurde darüber berichtet, dass sich die Reaktivität der zur "lebenden kationischen Polymerisation" eingesetzten Initiatorsysteme gezielt durch Zugabe von Donoren steuern lässt. Hierbei handelt es sich um aprotische Verbindungen mit einem nucleophilen, freien Elektronenpaar. Beispiele für derartige Donoren sind Amide wie N,N-Dimethylacetamid und Pyridin-Verbindungen. Bei der Verwendung derartiger Donoren treten jedoch häufig schwer lösliche Niederschläge an den Reaktorwänden auf, die sich auf die Qualität des Polymerisationsproduktes nachteilig auswirken. Die Anmelderin vermutet, dass diese Ablagerungen auf die Bildung schwerlöslicher Addukte aus Donor-Verbindung und Lewis-Säure zurückzuführen sind. Die hierbei erzeugten Inhomogenitäten führen insbesondere zu einer Verschlechterung der molekularen Einheitlichkeit. Zudem besteht insbesondere bei kontinuierlich geführten Prozessen die Gefahr, dass die Ablagerungen zu Verstopfungen führen, die eine Kontrolle der Polymerisation verhindern und im Extremfall zur Zerstörung der Anlage führen können.

US 5,902,919 offenbart ein Verfahren zur Herstellung von Polyisobutenen. Gemäß der Beispiele von US 5,902,919 wird Isobuten mit Hilfe einer Lewis-Säure in Gegenwart von tertiär-Butylchlorid polymerisiert.
Die Lewis-Säure ist auf einem Träger fixiert und wird mit Trimethylchlorsilan behandelt.

US 5,247,021 offenbart ein Verfahren zur Herstellung von Polyisobutenen mit reaktiven Endgruppen. Dort wird Isobuten mit einer Lewis-Säure und einer aprotischen Verbindung mit einer funktionellen Gruppe polymerisiert.

Der vorliegenden Erfindung liegt somit die Aufgabe zugrunde, ein Verfahren zur Polymerisation von Isobuten und isobutenhaltigen Monomermischungen bereitzustellen, das zu Produkten mit hoher molekularer Einheitlichkeit führt. Außerdem sollte das Verfahren nicht oder in nicht nennenswertem Maße zu Ablagerungen an den Reaktorwänden führen, damit eine kontinuierliche Reaktionsführung möglich ist.

Diese Aufgabe wird überraschenderweise gelöst durch ein Polymerisationsverfahren für Isobuten oder Mischungen von Isobuten mit ethylenisch ungesättigten Comonomeren unter den Bedingungen einer "lebenden kationischen Polymerisation", bei dem das Initiatorsystem zusätzlich wenigstens eine nicht polymerisierbare, aprotische siliziumorganische Verbindung mit wenigstens einer Si-O-Bindung umfasst. Man vermutet, dass die siliziumorganische Verbindung dabei als Donor wirkt.

Demnach betrifft die vorliegende Erfindung ein Verfahren zur Herstellung von Homo- und Copolymeren des Isobutens durch kationische Polymerisation von Isobuten oder Mischungen von Isobuten mit ethylenisch ungesättigten Comonomeren in Gegenwart eines Initiatorsystems umfassend:
i) eine Lewissäure, ausgewählt unter kovalenten (Halb)Metall-Halogen-Verbindungen
ii) wenigstens eine aprotische organische Verbindng I mit wenigstens einer funktionellen Gruppe FG, die unter Polymerisationsbedingungen mit der Lewis-Säure ein Carbokation oder einen kationogenen Komplex bildet,
   in einem gegenüber der Lewis-Säure inerten organischen Lösungsmittel, dadurch gekennzeichnet, dass das Initiatorsystem zusätzlich
iii) wenigstens eine nicht polymerisierbare, aprotische siliziumorganische Verbindung II mit wenigstens einer Si-O-Bindung umfasst.

Im erfindungsgemäßen Verfahren wird die Polymerisation des Isobutens durch das Initiatorsystem aus wenigstens einer Lewissäure, wenigstens einer organischen Verbindung I und wenigstens einer Donorverbindung II, bei der es sich um eine siliziumorganische Verbindung mit wenigstens einer Si-O-Bindung handelt, ausgelöst. Man nimmt an, dass die Lewissäure mit der Verbindung I ein Carbokation oder zumindest einen kationogenen Komplex bildet, der mit der olefinisch ungesättigten Doppelbindung des Isobutens bzw. des Comonomers wechselwirkt und dabei eine positive (Partial-)Ladung im Monomer, z.B auf dem tertiären Kohlenstoffatom des Isobutens erzeugt. Diese wiederum wechselwirkt mit einem weiteren Isobutenmolekül bzw. einem weiteren Monomer unter Fortsetzung der Polymerisationsreaktion. Als Verbindungen I kommen daher alle jene Verbindungen in Betracht, die bekanntermaßen mit den obengenannten Lewissäuren ein Carbokation oder zumindest einen kationogenen Komplex bilden. Durch die Donorverbindung II wird vermutlich der Komplex aus Verbindung I und Lewissäure stabilisiert oder zumindest hinsichtlich der Reaktivität modifiziert.

Die Begriffe "Carbokation" und "kationogener Komplex" sind nicht streng voneinander getrennt, sondern umfassen alle Zwischenstufen von Solvens-getrennten Ionen, Solvens-getrennten Ionenpaaren, Kontaktionenpaaren und stark polarisierten Komplexen mit positiver Partialladung an einem C-Atom der Verbindung I.

Als Verbindungen der Formel I sind grundsätzlich alle organischen Verbindungen geeignet, die wenigstens eine nucleophil verdrängbare Abgangsgruppe X aufweisen und die eine positive Ladung oder Partial-Ladung an dem C-Atom, welches die Abgangsgruppe X trägt, stabilisieren können. Hierzu zählen bekanntermaßen Verbindungen, die wenigstens eine Abgangsgruppe X aufweisen, die an ein sekundäres oder tertiäres aliphatisches Kohlenstoffatom oder an ein allylisches oder benzylisches Kohlenstoffatom gebunden ist. Als Abgangsgruppen kommen dabei insbesondere Halogen, C₁-C₆-Alkoxy und C₁-C₆-Acyloxy in Betracht.

Halogen steht hier insbesondere für Chlor, Brom oder Jod und speziell für Chlor. C₁-C₆-Alkoxy kann sowohl linear als auch verzweigt sein, und steht beispielsweise für Methoxy, Ethoxy, n-Propoxy, Isopropoxy, n-Butoxy, Isobutoxy, n-Pentoxy oder n-Hexoxy. C₁-C₆-Alkylcarbonyloxy steht beispielsweise für Acetoxy, Propionyloxy, n-Butyroxy oder Isobutyroxy.

Erfindungsgemäß werden solche Verbindungen der allgemeinen Formel I, verwendet worin die funktionelle Gruppe die allgemeine Formel FG 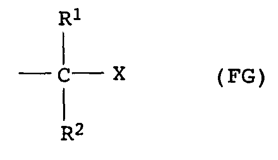 aufweist, worin
- X: ausgewählt ist unter Halogen, C₁-C₆-Alkoxy und C₁-C₆-Acyloxy,
- R¹: Wasserstoff oder Methyl bedeutet und
- R²: für Methyl steht, oder mit R¹ oder dem Molekülteil an den die funktionelle Gruppe FG gebunden ist, einen C₅-C₆-Cycloalkyl-ring bildet, R² auch Wasserstoff bedeuten kann, wenn die funktionelle Gruppe FG an ein aromatisches oder olefinisch ungesättigtes C-Atom gebunden ist.

Die Verbindungen der allgemeinen Formel I weisen vorzugsweise eine, zwei, drei oder vier, insbesondere eine oder zwei funktionelle Gruppen FG auf. Bevorzugt steht X in Formel (FG) für ein Halogenatom, insbesondere für Chlor.

Die Verbindungen I gehorchen den allgemeinen Formeln I-A bis I-D: 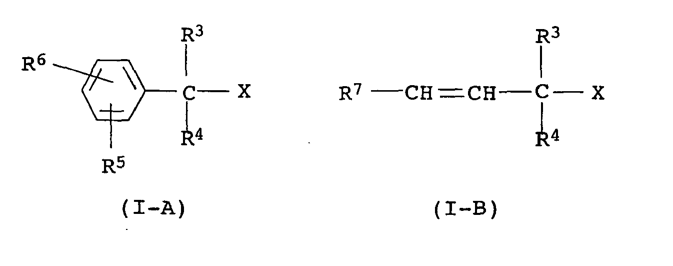 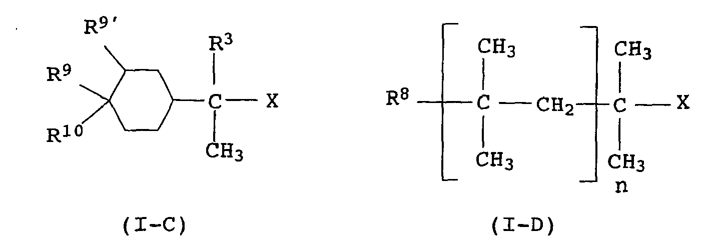 worin X die zuvor genannte Bedeutung hat,
- n: für 0, 1, 2, 3, 4 oder 5 steht,
- R³, R⁴ und R¹⁰: unabhängig voneinander für Wasserstoff oder Methyl stehen,
- R⁵, R⁶ und R⁷: unabhängig voneinander für Wasserstoff, C₁-C₄-Alkyl oder eine Gruppe CR³R⁴-X stehen, worin R³, R⁴ und X die zuvor genannten Bedeutungen haben und
- R⁸: für Wasserstoff, Methyl oder ein Gruppe X steht und
- R⁹ und R^{9'}: Wasserstoff oder eine Gruppe X bedeuten.

In den Formeln I-A bis I-D stehen R³ und R⁴ vorzugsweise beide für Methyl. In der Formel I-A steht R⁶ beispielsweise für eine Gruppe CR³R⁴-X, die in para-Position zur CR³R⁴X-Gruppe angeordnet ist, wenn R⁵ Wasserstoff bedeutet. Sie kann sich auch in der meta-Position befinden, wenn die Gruppe R⁵ für C₁-C₄-Alkyl oder eine Gruppe CR³R⁴-X steht. Bevorzugte Verbindungen I-A sind z.B. 2-Chlor-2-phenylpropan (Cumylchlorid) und 1,4-Bis(2-chlorpro-pyl-2)benzol (para-Dicumyldichlorid).

In Formel I-B steht R⁷ vorzugsweise für eine Gruppe CR³R⁴-X oder für Wasserstoff. Beispiele für Verbindungen der Formel I-B sind Allylchlorid, Methallylchlorid, 2-Chlor-2-methylbuten-2 sowie 2,5-Dichlor-2,5-dimethylhexen-3.

In den Verbindungen I-C steht R³ vorzugsweise für Methyl. R² steht vorzugsweise ebenfalls für Methyl. R⁹ steht vorzugsweise für eine Gruppe X, und insbesondere für Halogen, insbesondere, wenn R¹⁰ für Methyl steht. Beispiele für Verbindungen der allgemeinen Formel I-C sind 1,8-Dichlor-4-p-menthan (Limonendihydrochlorid), 1,8-Dibrom-4-p-menthan (Limonendihydrobromid), 1-(1-Chlorethyl-3-chlor-cyclohexan, 1-(1-Chlorethyl-4-chlorcyclohexan, 1-(1-Bromethyl)-3-bromcyclohexan und 1-(1-Bromethyl)-4-bromcyclohexan.

Unter den Verbindungen der Formel I-D sind solche bevorzugt, in denen R⁸ für eine Methylgruppe steht. Bevorzugt sind außerdem Verbindungen der allgemeinen Formel I-D, in denen R⁸ für eine Gruppe X, und insbesondere ein Halogen-Atom, steht, wenn n > 0 ist.

Im Hinblick auf die Verwendung der nach dem erfindungsgemäßen Verfahren hergestellten Polyisobutene als Kraft- oder Schmierstoffadditive werden unter den Verbindungen I die Verbindungen der Formel I-D bevorzugt, und hierunter insbesondere solche, in denen X für ein Halogenatom steht. Vorzugsweise steht in der Formel I-D die Variable n für 1, 2, 3 oder 4, und insbesondere für 1 oder 2, oder für 0, wenn R⁸ eine Methylgruppe bedeutet. Für viele andere Zwecke, insbesondere bei der Herstellung mittel- und höhermolekularer Polymere z.B. oberhalb 2000, insbesondere oberhalb 3000 Dalton, werden die Verbindungen I-A bevorzugt.

In der Regel wird man im erfindungsgemäßen Verfahren die Verbindung I in einer Menge von wenigstens 10⁻⁶ mol pro mol Isobuten bzw. pro mol polymerisierbare Monomere einsetzen, um eine ausreichende Konzentration an Initiator-Komplexen zur Verfügung zu stellen. In der Regel wird die Menge der Verbindungen I einen Wert von 1 mol je mol zu polymerisierenden Monomeren (bzw. Isobuten) nicht überschreiten. Diese sowie die im Folgenden zu Mengen der Verbindung I gemachten Angaben sind, sofern nichts anderes angegeben ist, stets auf die Anzahl der funktionellen Gruppen (FG) in der Verbindung I bezogen. Vorzugsweise setzt man die Verbindungen der Formel I in einer Menge von 10⁻⁵ bis 10⁻¹ mol, insbesondere 10⁻⁴ bis 5 x 10⁻² mol, bezogen auf die funktionellen Gruppen (FG) der Verbindung I, je mol Isobuten, bzw. polymerisierbare Monomere, ein. Hierbei ist zu berücksichtigen, dass das erreichte Molekulargewicht des nach dem erfindungsgemäßen Verfahren hergestellten Polyisobutens von der Menge an Verbindung I dergestalt abhängt, dass mit zunehmender Konzentration an Verbindung I das Molekulargewicht des Polyisobutens abnimmt.

Als Lewissäure kommen grundsätzlich kovalente Metallhalogenide und Halbmetallhalogenide, die in der Regel eine Elektronenpaarlücke aufweisen, in Betracht. Derartige Verbindungen sind dem Fachmann bekannt, beispielsweise aus Kennedy et al., loc. cit., und sind in der Regel ausgewählt unter kovalenten Metall-HalogenVerbindungen des Titans, des Zinns, des Aluminiums, des Vanadiums oder des Eisens, sowie den Halogeniden des Bors. Bevorzugt sind die Chloride, und im Falle des Aluminiums auch die Monoalkylaluminiumchloride und die Dialkylaluminiumchloride. Beispiele für bevorzugte Lewissäuren sind Titan(IV)chlorid, Bortrichlorid, Zinn(IV)chlorid, Aluminiumtrichlorid, Vanadium(V)chlorid, Eisen(III)chlorid, C₁-C₆-Alkyl-AlCl₂ und (C₁-C₆-Alkyl)₂AlCl. Besonders bevorzugte Lewissäuren sind Titan(IV)chlorid und Bortrichlorid.

Die Lewissäure wird im erfindungsgemäßen Verfahren naturgemäß in einer Menge eingesetzt, die zur Bildung des Initiatorkomplexes ausreicht. Dies ist in der Regel bereits bei geringen Konzentrationen der Lewissäure im Reaktionsmedium gewährleistet. Vorzugsweise beträgt das Molverhältnis von Lewissäure zu Verbindung I 20:1 bis 1:20, insbesondere 10:1 bis 1:10. Die Konzentration der Lewissäure im Reaktionsmedium liegt in der Regel im Bereich von 10⁻³ bis 1 mol/l, vorzugsweise im Bereich von 5 x 10⁻³ bis 0,3 mol/l, insbesondere im Bereich von 0,01 bis 0,2 mol/l.

Bei den nicht polymerisierbaren, aprotischen siliziumorganischen Verbindungen II handelt es sich in der Regel um solche Verbindungen, die wenigstens einen, über ein Sauerstoffatom gebundenen organischen Rest mit in der Regel 1 bis 20 Kohlenstoffatomen aufweisen. Beispiele für derartige Reste sind Alkyloxy, Cycloalkyloxy, Aryloxy, Arylalkyloxy und Acyloxy (Alkylcarbonyloxy).

Unter Alkyl versteht man einen linearen oder verzweigten gesättigten Kohlenwasserstoffrest mit in der Regel 1 bis 20 C-Atomen, und vorzugsweise 1 bis 10 C-Atomen, wie Methyl, Ethyl, n-Propyl, Isopropyl, n-Butyl, Isobutyl, tert.-Butyl, 2-Butyl, n-Pentyl, 2-Methylbutyl-1, 2-Methylpentyl-1, 2-Ethylbutyl-1, n-Hexyl, 2-Hexyl, 2-Methylhexyl-1, 2-Ethylhexyl-1, n-Heptyl, n-Octyl, Isooctyl, n-Decyl, und vergleichbare Reste.

Aryl steht für einen aromatischen Kohlenwasserstoffrest mit in der Regel 6 bis 20 C-Atomen, wie Phenyl, Naphthyl und vergleichbare Gruppen, die eine oder mehrere C₁-C₁₀-Alkylgruppen als Substituenten aufweisen können, z.B. Tolyl, Isopropylphenyl, Xylyl oder tert.-Butylphenyl.

Cycloalkyl bedeutet hier einen in der Regel 5-, 6- oder 7-gliedrigen, gesättigten Carbocyclus, der gegebenenfalls eine oder mehrere C₁-C₁₀-Alkylgruppen als Substituenten aufweisen kann.

Arylalkyl steht für einen Alkylrest mit in der Regel 1 bis 10 C-Atomen, und vorzugsweise 1 bis 4 C-Atomen, der durch einen Arylrest, wie vorstehend definiert, substituiert ist, z.B. für Benzyl oder 2-Phenylethyl.

Alkyloxy steht für über ein Sauerstoffatom gebundenes Alkyl. Dementsprechend stehen Aryloxy, Cycloalkyloxy und Arylalkyloxy für über ein Sauerstoffatom gebundenes Aryl, Cycloalkyl bzw. Arylalkyl.

Acyloxy steht für einen über Sauerstoff gebundenen Alkylcarbonyl-Rest, der vorzugsweise 1 bis 6 C-Atome im Alkylteil aufweist, z.B. für Acetyloxy, Propionyloxy, Butyroxy etc.

Die siliziumorganischen Verbindungen II können ein oder mehrere, z.B. 2 oder 3, Siliziumatome mit wenigstens einem über Sauerstoff gebundenen organischen Rest aufweisen. Bevorzugt sind solche siliziumorganischen Verbindungen II, die einen, zwei oder drei, und insbesondere 2 oder 3 über Sauerstoff gebundene organische Reste je Siliziumatom aufweisen.

Bevorzugte siliziumorganische Verbindungen sind solche, die die allgemeine Formel II aufweisen:

R^{a}ₙSi (OR^{b})₄₋ₙ (II)

worin n für 1, 2 oder 3 steht,
- R^{a}: gleich oder verschieden sein können und unabhängig voneinander C₁-C₂₀-Alkyl, C₅-C₇-Cycloalkyl, Aryl oder Aryl-C₁-C₄-alkyl bedeuten, wobei die drei letztgenannten Reste auch eine oder mehrere C₁-C₁₀-Alkylgruppen als Substituenten aufweisen können, und
- R^{b}: gleich oder verschieden sind und C₁-C₂₀-Alkyl bedeuten oder für n = 1 oder 2 zwei verschiedene Reste R^{b} gemeinsam auch eine 2- oder 3-gliedrige Alkylen-Einheit bilden können.

In Formel II steht die Variable n vorzugsweise für 1 oder 2. Die Variable R^{a} bedeutet vorzugsweise eine C₁-C₈-Alkylgruppe, und insbesondere eine verzweigte oder über ein sekundäres C-Atom gebundene Alkylgruppe, wie Isopropyl, Isobutyl, 2-Butyl, oder eine 5-, 6- oder 7-gliedrige Cycloalkylgruppe. Die Variable R^{b} steht vorzugsweise für eine C₁-C₄-Alkylgruppe.

Beispiele für derartige bevorzugte Verbindungen sind Dimethoxydiisopropylsilan, Dimethoxyisobutylisopropylsilan, Dimethoxydiisobutylsilan, Dimethoxydicyclopentylsilan, Dimethoxyisobutyl-2-butylsilan, Diethoxyisobutylisopropylsilan, Triethoxytoluylsilan und Triethoxybenzylsilan.

Im erfindungsgemäßen Verfahren wird die siliziumorganische Verbindung II in einer Menge eingesetzt, dass das Molverhältnis von Siliziumatomen in der siliziumorganischen Verbindung II zu den Metallatomen bzw. den Halbmetallatomen in der Lewissäure im Bereich von 0,05:1 bis 50:1, vorzugsweise im Bereich von 0,1:1 bis 10:1, und besonders bevorzugt im Bereich von 0,1 bis 2:1, liegt. Ganz besonders bevorzugt verwendet man die siliziumorganische Verbindung II im molaren Unterschuss (gerechnet als das Verhältnis der Siliziumatome zu den (Halb)Metallatomen).

Nach dem erfindungsgemäßen Verfahren können sowohl Isobuten als solches als auch Monomermischungen des Isobutens mit olefinisch ungesättigten Monomeren, welche bekanntermaßen mit Isobuten unter kationischen Polymerisationsbedingungen copolymerisierbar sind, umgesetzt werden. Das erfindungsgemäße Verfahren ist außerdem zur Blockcopolymerisation von Isobuten mit unter kationischen Polymerisationsbedingungen polymerisierbaren ethylenisch ungesättigten Comonomeren geeignet. Sofern Monomermischungen des Isobutens mit geeigneten Comonomeren polymerisiert werden sollen, enthält die Monomermischung vorzugsweise mehr als 80 Gew.-%, insbesondere mehr als 90 Gew.-%, und, besonders bevorzugt, mehr als 95 Gew.-% Isobuten, und weniger als 20 Gew.-%, vorzugsweise weniger als 10 Gew.-%, und insbesondere weniger als 5 Gew.-%, Comonomere.

Als copolymerisierbare Monomere kommen Vinylaromaten wie Styrol und α-Methylstyrol, C₁-C₄-Alkylstyrole wie 2-, 3- und 4-Methylstyrol, sowie 4-tert.-Butylstyrol, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(methoxyethoxy)silyl]-2-methylpropen-2.

Bevorzugte Ausführungsformen des erfindungsgemäßen Verfahrens betreffen die Homopolymerisation von Isobuten bzw. isobutenhaltigen Einsatzstoffen, sowie die Blockcopolymerisation von Isobuten mit vinylaromatischen Monomeren. Hierbei enthalten die Isobuten-Einsatzstoffe in der Regel weniger als 5 Gew.-%, bezogen auf die Gesamtmenge des isobutenhaltigen Einsatzstoffes, an copolymerisierbaren Monomeren. Dies gilt für die Blockcopolymerisation in analoger Weise auch für die vinylaromatischen Monomere.

Als Isobuten-Einsatzstoffe für das erfindungsgemäße Verfahren eignen sich sowohl Isobuten selber als auch isobutenhaltige C₄-Kohlenwasserstoffströme, beispielsweise C₄-Raffinate, C₄-Schnitte aus der Isobuten-Dehydrierung, C₄-Schnitte aus Steamcrackern, FCC-Crackern (FCC: Fluid Catalysed Cracking), sofern sie weitgehend von darin enthaltenen 1,3-Butadien befreit sind. Erfindungsgemäß geeignete C₄-Kohlenwasserstoffströme enthalten in der Regel weniger als 500 ppm, vorzugsweise weniger als 200 ppm Butadien. Bei Einsatz von C₄-Schnitten als Einsatzmaterial übernehmen die von Isobuten verschiedenen Kohlenwasserstoffe die Rolle eines inerten Lösungsmittels.

In der Regel wird man das erfindungsgemäße Verfahren bei Temperaturen unterhalb 0°C, z.B. im Bereich von 0 bis -140°C, vorzugsweise im Bereich von -30 bis -120°C, und besonders bevorzugt im Bereich von -40 bis -110°C durchführen. Der Reaktionsdruck ist von untergeordneter Bedeutung und richtet sich in bekannter Weise nach den verwendeten Apparaturen und sonstigen Reaktionsbedingungen.

Als Lösungsmittel kommen alle organischen Verbindungen in Betracht, die von den Verbindungen I und II sowie den polymerisierbaren Monomeren, insbesondere Isobuten, verschieden sind und die keine abstrahierbaren Protonen aufweisen. Bevorzugte Lösungsmittel sind acyclische Alkane mit 2 bis 8 und vorzugsweise 3 bis 6 Kohlenstoffatomen wie Ethan, Iso- und n-Propan, n-Butan und seine Isomeren, n-Pentan und seine Isomeren, n-Hexan und seine Isomeren sowie n-Heptan und seine Isomeren, cyclische Alkane mit 5 bis 8 C-Atomen wie Cyclopentan, Cyclohexan, Cycloheptan, acyclische Alkene mit vorzugsweise 2 bis 8 Kohlenstoffatomen wie Ethen, Iso-und n-Propen, n-Buten, n-Penten, n-Hexen und n-Hepten, cyclische Olefine wie Cyclopenten, Cyclohexen und Cyclohepten, aromatische Kohlenwasserstoffe wie Toluol, Xylol, Ethylbenzol oder Chlorbenzol, halogenierte Alkane mit 1 bis 5 Kohlenstoffatomen und 1, 2, 3, 4, 5 oder 6 Halogenatomen, ausgewählt unter Fluor oder insbesondere Chlor wie Methylchlorid, Dichlormethan, Trichlormethan, Ethylchlorid, 1,2-Dichlorethan und 1,1,1-Trichlorethan sowie Chloroform.

Geeignet sind nicht nur die Lösungsmittel als solche sondern auch Mischungen dieser Lösungsmittel. Mischungen sind insbesondere dann bevorzugt, wenn das Lösungsmittel einen Schmelzpunkt oberhalb der gewünschten Polymerisationstemperatur aufweist.

Besonders bevorzugt sind Lösungsmittel und Lösungsmittelgemische, die wenigstens ein cyclisches oder alicyclisches Alkan und/oder ein α-Olefin umfassen. Hierunter besonders bevorzugt sind Lösungsmittelgemische, die wenigstens einen nicht halogenierten Kohlenwasserstoff und wenigstens einen halogenierten Kohlenwasserstoff, vorzugsweise ein aliphatisches oder cycloaliphatisches Alkan, und einen chlorierten Kohlenwasserstoff umfassen. Selbstverständlich umfassen die chlorierten Kohlenwasserstoffe dabei keine Verbindung, worin Chloratome an sekundären oder tertiären Kohlenstoffatomen sitzen.

Es versteht sich von selbst, dass man die Polymerisation unter weitgehend aprotischen, insbesondere unter wasserfreien, Reaktionsbedingungen durchführt. Unter aprotischen beziehungsweise wasserfreien Reaktionsbedingungen versteht man, dass der Wassergehalt (bzw. der Gehalt an protischen Verunreinigungen) im Reaktionsgemisch weniger als 50 ppm, und insbesondere weniger als 5 ppm beträgt. In der Regel wird man daher die Einsatzstoffe vor ihrer Verwendung physikalisch und/oder durch chemische Maßnahmen trocknen. Beispielsweise kann man die als Lösungsmittel bevorzugt eingesetzten aliphatischen oder cycloaliphatischen Kohlenwasserstoffe nach üblicher Vorreinigung und Vortrocknung mit einer metallorganischen Verbindung, beispielsweise einer Organolithium-, organomagnesium- oder organoaluminium-Verbindung, in einer zur Entfernung von Wasserspuren aus dem Lösungsmittel ausreichenden Menge versetzen. Das so behandelte Lösungsmittel wird dann direkt in das Reaktionsgefäß einkondensiert. In ähnlicher Weise kann man auch mit den α-Olefinen, den aromatischen Kohlenwasserstoffen und den zu polymerisierenden Monomeren, insbesondere dem Isobuten, verfahren.

Die Vorreinigung bzw. Vortrocknung der Lösungsmittel und des Isobutens erfolgt in üblicher Weise, vorzugsweise durch Behandlung mit festen Trocknungsmitteln wie Molekularsieben oder vorgetrockneten Oxiden wie Calciumoxid oder Bariumoxid. In analoger weise kann man die Einsatzstoffe trocknen, für die eine Behandlung mit Metallalkylen nicht in Betracht kommt, beispielsweise die als Lösungsmittel verwendeten Alkylhalogenide, sowie die Verbindungen I und II.

Die Polymerisation des Isobutens bzw. der isobutenhaltigen Monomermischung erfolgt spontan beim Vermischen des erfindungsgemäß zur Anwendungen kommenden Initiatorsystems mit dem Isobuten bzw. der isobutenhaltigen Monomermischung in dem inerten organischen Lösungsmittel bei der gewünschten Reaktionstemperatur. Hierbei kann man z.B. so vorgehen, dass man Isobuten bzw. die Monomermischung in dem inerten Lösungsmittel vorlegt, auf Reaktionstemperatur kühlt und anschließend das Initiatorsystem zugibt. Man kann auch so vorgehen, dass man das Initiatorsystem in dem Lösungsmittel vorlegt, und anschließend das Isobuten bzw. die isobutenhaltige Monomermischung auf einmal, oder nach Maßgabe ihres Verbrauchs zugibt. Außerdem kann man einen Teil oder die Gesamtmenge des Isobutens bzw. der isobutenhaltigen Monomermischung in dem Lösungsmittel vorlegen und dann das Initiatorsystem zugeben. Die Restmengen an Isobuten bzw. isobutenhaltiger Monomermischung werden dann im Verlaufe der Reaktion, beispielsweise nach Maßgabe ihres Verbrauchs, zugeführt.

Bei der Zugabe des Initiatorsystems wird man in der Regel so vorgehen, dass man die Komponenten des Initiatorsystems getrennt zugibt. Bei der diskontinuierlichen Fahrweise wird man in der Regel so vorgehen, dass man zuerst die Verbindung I und die Verbindung II, und anschließend die Lewissäure zugibt. Der Zeitpunkt der Initiatorzugabe gilt dann als der Zeitpunkt, an dem alle Komponenten des Initiatorsystems im Reaktionsgefäß enthalten sind. Beispielsweise kann man so vorgehen, dass man zunächst das Lösungsmittel, dann die Verbindung I und die Verbindung II, und dann einen Teil oder die Gesamtmenge des Isobutens bzw. des isobutenhaltigen Einsatzstoffes vorlegt, die Polymerisation durch Zugabe der Lewissäure startet, und anschließend gegebenenfalls noch vorhandene Restmengen an Isobuten bzw. isobutenhaltigem Einsatzstoff der Polymerisation zuführt. Es ist aber auch möglich, zunächst das Lösungsmittel, dann die Lewissäure und anschließend einen Teil oder die Gesamtmenge des Isobutens bzw. des isobutenhaltigen Einsatzstoffs vorzulegen und dann die Polymerisation durch Zugaben der Verbindung I und der Verbindung II zu starten.

Neben der hier beschriebenen diskontinuierlichen Vorgehensweise kann man die Polymerisation auch als kontinuierliches Verfahren ausgestalten. Hierbei führt man die Einsatzstoffe, d.h. die zu polymerisierenden Monomere, das Lösungsmittel sowie das Initiatorsystem der Polymerisationsreaktion kontinuierlich zu und entnimmt kontinuierlich Reaktionsprodukt, so dass sich im Reaktor mehr oder weniger stationäre Polymerisationsbedingungen einstellen. Die Komponenten des Initiatorsystems können dabei sowohl getrennt als auch gemeinsam, vorzugsweise verdünnt im Lösungsmittel zugeführt werden. Das zu polymerisierende Isobuten bzw. die isobutenhaltige Monomergemische können als solche, verdünnt mit einem Lösungsmittel oder als isobutenhaltiger Kohlenwasserstoffstrom zugeführt werden.

Beispielsweise kann die Zugabe der im Lösungsmittel verdünnten Komponenten des Initiatorsystems über Mehrstoffdüsen erfolgen, um eine gute Durchmischung der Komponenten zu erreichen.

Die Abführung der Reaktionswärme bei der diskontinuierlichen wie auch bei der kontinuierlichen Reaktionsführung erfolgt in üblicher Weise, beispielsweise durch intern eingebaute Wärmetauscher und/oder durch Wandkühlung und/oder unter Ausnutzung einer Siedekühlung. Hier hat sich insbesondere die Verwendung von Ethen und/oder Mischungen von Ethen mit anderen Kohlenwasserstoffen und/oder Halogenkohlenwasserstoffen als Lösungsmittel bewährt, da Ethen nicht nur preiswert ist, sondern auch einen Siedepunkt im gewünschten Polymerisationstemperaturbereich aufweist.

Als Reaktionsgefäße für die Durchführung des erfindungsgemäßen Verfahrens kommen grundsätzlich alle Reaktoren in Betracht, wie sie üblicherweise bei einer kationischen Polymerisation von Isobuten, z.B. einer kationischen Polymerisation von Isobuten mit Bortrifluorid-Sauerstoff-Komplexen, eingesetzt werden. Insoweit wird hier auf den einschlägigen Stand der Technik verwiesen. Bei diskontinuierlicher Reaktionsführung kommen die hierfür üblichen Rührkessel in Betracht, die vorzugsweise mit einer Siedekühlung, geeigneten Mischern, Zuläufen, Wärmetauscherelementen und Inertisierungsvorrichtungen ausgerüstet sind. Die kontinuierliche Reaktionsführung kann in den hierfür üblichen Reaktionskesseln, Reaktionskaskaden, Rohrreaktoren, Rohrbündelreaktoren, insbesondere kreisförmig geführten Rohr- und Rohrbündelreaktoren, durchgeführt werden, die vorzugsweise in der oben für Reaktionskessel beschriebenen Weise ausgerüstet sind.

Zur Gewinnung der Isobutene aus dem Reaktionsgemisch wird dieses im Anschluß an die Polymerisation in der für kationische Polymerisationsreaktionen üblichen Weise deaktiviert, vorzugsweise durch Zugabe einer protischen Verbindung, insbesondere durch Zugabe von Alkoholen wie Methanol, Ethanol, n-Propanol, Isopropanol, n-Butanol, Isobutanol, sec.-Butanol oder tert.-Butanol, oder deren Mischungen mit Wasser. Vorzugsweise werden die zur Deaktivierung verwendeten Substanzen in einem Verdünnungsmittel, beispielsweise einem der sogenannten Lösungsmittel, eingesetzt, um eine unerwünschte Viskositätssteigerung zu vermeiden. Im Übrigen sei auch hier auf den eingangs zitierten Stand der Technik zur Polymerisation von Bortrifluorid mit Isobuten verwiesen, dessen Maßnahmen zur Aufarbeitung in analoger Weise auf das erfindungsgemäße Verfahren übertragen werden können.

In einer weiteren Ausführungsform der Erfindung wird die Polymerisation durch Zugabe einer Trialkylallylsilanverbindung, z.B. durch Zugabe von Trimethylallylsilan ((CH₃)₃Si-CH₂-CH=CH₂), abgebrochen. Derartige Verbindungen werden üblicherweise in Mengen von 0,3 bis 3 mol, vorzugsweise 0,5 bis 1,5 mol je mol funktionelle Gruppen FG eingesetzt. Die Verwendung der Allylsilane führt zum Abbruch der Polymerisation unter Einführung einer Propenyl-Gruppe am Polymerkettehende. Wegen weiterer Details zu dieser Reaktion sei an dieser Stelle auf die EP-A 713 883 verwiesen.

Vorzugsweise wird das zur Deaktivierung verwendete Mittel oder dessen Mischung mit einem inerten Lösungsmittel vor der Deaktivierung auf Polymerisationstemperatur abgekühlt, um unerwünschte Nebenreaktionen zu vermeiden.

Anschließend wird das Lösungsmittel in geeigneten Aggregaten wie Rotations-, Fallfilm- oder Dünnschichtverdampfern oder mittels Flash-Verdampfung (hierunter versteht man die Entspannung der Reaktionslösung hinter einem Wärmetauscher in Rohrleitungen oder über eine Loch- bzw. Düsenplatte) entfernt. Vorzugsweise legt man zur Entfernung des Lösungsmittels einen verringerten Druck an, z.B. im Bereich von 0,1 bis 800 mbar, insbesondere im Bereich von 1 bis 100 mbar. Sumpftemperaturen von 50° bis 250°C, und insbesondere 150 bis 220°C, sind bevorzugt.

Zur Herstellung von Blockcopolymeren aus Isobuten und vinylaromatischen Monomeren wird man in der Regel zunächst Isobuten oder eine im Wesentlichen Isobuten enthaltende Monomermischung in einem der oben genannten Lösungsmittel in Anwesenheit des erfindungsgemäßen Initiatorsystems bei Temperaturen von vorzugsweise unterhalb 0°C, insbesondere im Bereich von -20 bis -120°C, und besonders bevorzugt im Bereich von -50 bis -110°C umsetzen, bis der gewünschte Umsatz des Isobutens erreicht ist. Dann wird man die vinylaromatischen Monomere zur Erzeugung der weiteren Polymerblöcke zugeben. Während oder nach der Zugabe der vinylaromatischen Monomere kann man die Reaktionstemperatur beibehalten oder, in Abhängigkeit von der Reaktivität der vinylaromatischen Verbindung, anheben. Vorzugsweise führt man die Polymerisation der vinylaromatischen Monomere bei Temperaturen oberhalb -50°C, beispielsweise im Bereich von -50 bis +50°C, durch. In der Regel wird man die Polymerisation des Isobutens bis zu einem Umsatz von wenigstens 80%, und vorzugsweise wenigstens 90% führen, bevor man die vinylaromatischen Monomere zugibt. Vorzugsweise erfolgt die Zugabe der vinylaromatischen Monomere, bevor 99% des Isobutens und insbesondere bevor 98% des Isobutens umgesetzt sind, da ansonsten die Gefahr besteht, dass ein Teil der aktiven Endgruppen deaktiviert wird.

Auf diese weise erreicht man, dass zunächst ein im Wesentlichen aus Isobuten-Einheiten aufgebauter Polymerblock entsteht, der an einem, oder bei Verwendung mehrfach funktionalisierter Verbindungen I, an seinen Enden Polymerblöcke trägt, die aus vinylaromatischen Monomeren aufgebaut sind, und die im Wesentlichen unsegmentiert, d.h. frei von Isobuteneinheiten, sind. Derartige Blockcopolymere sind insbesondere als Dichtungsmaterialien von Interesse.

Das erfindungsgemäße Verfahren ist außerdem insbesondere zur Herstellung von Polyisobutenen geeignet, d.h. Polymeren, die zu wenigstens 80, vorzugsweise zu wenigstens 90%, aus einpolymerisiertem Isobuten aufgebaut sind. Durch das erfindungsgemäße Verfahren sind Polyisobutene mit Molekulargewichten (zahlenmittleres Molekulargewicht Mₙ) im Bereich von 400 bis 400000 Dalton, vorzugsweise im Bereich von 500 bis 200000 Dalton, und besonders bevorzugt im Bereich von 700 bis 100000 Dalton, zugänglich. Bevorzugt ist das erfindungsgemäße Verfahren zur Herstellung von Polyisobutenen mit zahlenmittleren Molekulargewichten oberhalb 2000, insbesondere oberhalb 3000 Dalton geeignet. Das Molekulargewicht kann der Fachmann in einfacher Weise durch Variation der Konzentration an eingesetzter Verbindung I variieren, wobei eine hohe Konzentration an Verbindung I zu Polymeren mit einem niedrigen Molekulargewicht führt, und eine niedrige Konzentration an Verbindung I zu Polymeren mit höheren Molekulargewichten führt. Ähnliches gilt auch für die Herstellung der vinylaromatischen Polymerblöcke bei den Blockcopolymeren. Außerdem weisen die nach dem erfindungsgemäßen Verfahren erhaltenen Polymere funktionelle Endgruppen, beispielsweise Halogenatome oder olefinisch ungesättigte Doppelbindungen auf, die für weitere Funktionalisierungsmaßnahmen genutzt werden können. Dies ist insbesondere für die Herstellung von Kraftstoff- und Schmierstoffadditiven von Interesse, die in der Regel aus einem hydrophoben Kohlenwasserstoffrest, beispielsweise einer Polyisobutenylgruppe, und einem hydrophilen Molekülteil aufgebaut sind.

Die nach dem erfindungsgemäßen Verfahren hergestellten Polymere weisen überraschenderweise eine enge Molekulargewichtsverteilung auf. Die Dispersität D (Quotient des gewichtsmittleren Molekulargewichtes M_{w}, geteilt durch das zahlenmittlere Molekulargewicht Mₙ), der nach dem erfindungsgemäßen Verfahren hergestellten Polymere liegt vorzugsweise unterhalb 1,6, insbesondere unterhalb 1,4, und besonders bevorzugt im Bereich von 1,05 bis 1,3.

Alle Angaben zu Molekulargewichten beziehen sich auf Werte, wie sie mittels Gelpermeationschromatographie (GPC) ermittelt wurden. Die Gelpermeationschromatographie erfolgte mit THF als Fließmittel und CS₂ als Referenz an zwei hintereinander geschalteten Säulen (L 300 mm, d 7,8 mm), wobei die erste Säule mit Styragel HR5 (Molekulargewichtsbereich 50000 bis 4 x 10⁶) und die zweite Säule mit Styragel HR3 (Molekulargewichtsbereich 200 bis 30000) der Fa. Waters gepackt waren. Die Detektion erfolgte über ein Differentialrefraktometer. Als Standards zur Bestimmung des Isobutenblocks wurden käufliche Polyisobutenstandards im Molmassenbereich 224 bis 1000000 der Fa. Polymer-Standards Service, Mainz, Deutschland, eingesetzt. Bei der Bestimmung des Molekulargewichts der Blockcopolymere wurde zusätzlich ein Polystyrol-Eichfile und ein UV-Detektor herangezogen.

Die folgenden Beispiele sollen die Erfindung verdeutlichen, ohne sie jedoch einzuschränken.
I. Analytik
   Die Bestimmung des Molekulargewichts erfolgte mittels Gelpermeationschromatographie (GPC) gegen Polyisobutenstandards in der oben beschriebenen Weise.
II. Allgemeine Herstellungsvorschrift für ein Polymerisationsverfahren
   Auf einem 2 1-Vierhalskolben mit Rührer und Trockeneiskühlung wurden zwei Tropftrichter mit Kühlvorrichtung von je 1 1 platziert. Beide Tropftrichter wiesen eine Schüttung aus trockenem Molekularsieb 3Å über Glaswolle auf.
   In dem einen Tropftrichter werden 600 ml eines Lösungsmittelgemisches 20 min bei -78°C getrocknet. Das Lösungsmittel wird dann in den Reaktionskolben, der auf -70°C vortemperiert war, dosiert. Drei mol Isobuten wurden in den anderen, gekühlten Tropftrichter einkondensiert. Anschließend gab man innerhalb 25 min die Gesamtmenge an Isobuten in den Reaktionskolben. Unter Beibehaltung der Temperatur von -70°C gab man dann nacheinander über ein Septum 10 bis 24 mmol Donorverbindung II, 15 bis 35 mmol Verbindung I, und dann 40 mmol Lewissäure unter starkem Rühren zu. Nach 3 Stunden gab man bei -70°C 1 mol Isopropanol zu, erwärmte auf Raumtemperatur und wusch dann die Reaktionslösung dreimal mit je 200 ml Wasser. Anschließend engte man die Reaktionslösung ein und trocknete bei 200°C bis zu einem Endvakuum von 2 mbar. Auf diese Weise erhielt man etwa 140 bis 160 g Polymer. Die Einsatzmengen sind in Tabelle 1 angegeben. Die Eigenschaften des Polymeren sind in Tabelle 2 zusammengestellt.

**Tabelle 1: Einsatzstoffe**

| Beispiel | Donor II¹) [mmol] | | Verbindung I²) [mmol] | | Lewissäure | Lösungs mittel³⁾ |
|---|---|---|---|---|---|---|
| 1 | A | 15 | CC | 35 | TiCl₄ | CH₂Cl₂/Hexan 2:1 |
| 2 | B | 15 | CC | 15 | TiCl₄ | CH₂Cl₂/Hexan 2:1 |
| 3 | C | 10 | CC | 35 | TiCl₄ | Toluol/ CH₂Cl₂/Hexan 1:1:1 |
| 4 | D | 24 | CC | 35 | TiCl₄ | CH₂Cl₂/Hexan 2:1 |
| 5 | A | 15 | CC | 35 | BCl₃ | dito |
| 6 | A | 24 | pDCC | 15 | TiCl₄ | dito |
| 7 | A | 15 | pDCC | 15 | TiCl₄ | Toluol/ CH₂Cl₂/Hexan 1:1:1 |
| V1 | Pyridin | 15 | CC | 35 | TiCl₄ | CH₂Cl₂/Hexan 2:1 |
| V2 | Pyridin | 24 | pDCC | 15 | TiCl₄ | Toluol/ CH₂Cl₂/Hexan 1:1:1 |
| V3 | - | - | CC | 35 | TiCl₄ | CH₂Cl₂/Hexan 2:1 |

| | | | | | | |
|---|---|---|---|---|---|---|
| 1) A = Dicyclopentyldimethoxysilan B = Diisopropyldimethoxysilan C = Isopropylisobutyldimethoxysilan D = Tolouyltriethoxysilan | | | | | | |
| 2) CC = Cumylchlorid (2-Chlor-2-phenylpropan) pDCC = p-Dicumyldichlorid (1,4-Bis(2-chlorpropyl-2)benzol) | | | | | | |
| 3) Volumenanteile | | | | | | |

**Tabelle 2: Polymereigenschaften**

| Beispiel | Molekulargewicht Mₙ [Dalton] | Dispersität [M_{w}/Mₙ] |
|---|---|---|
| 1 | 5800 | 1,12 |
| 2 | 12300 | 1,18 |
| 3 | 4900 | 1,26 |
| 4 | 4700 | 1,30 |
| 5 | 3200 | 1,08 |
| 6 | 15300 | 1,17 |
| 7 | 12300 | 1,14 |
| V1 | 5200 | 1,31 |
| V2 | 12300 | 1,34 |
| V3 | 4000 | 2,30 |

## Patentansprüche

1. Verfahren zur Herstellung von Homo- und Copolymeren des Isobutens durch kationische Polymerisation von Isobuten oder Mischungen von Isobuten mit ethylenisch ungesättigten Comonomeren in Gegenwart eines Initiatorsystems umfassend:
i) eine Lewissäure, ausgewählt unter kovalenten Metall-Halogen-Verbindungen und kovalenten Halbmetall-Halogen-Verbindungen,
ii) wenigstens eine aprotische organische Verbindung I mit wenigstens einer funktionellen Gruppe FG der Formel 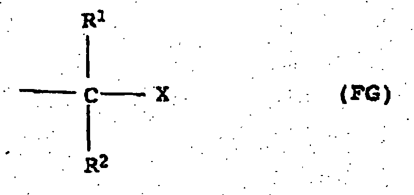 worin
x ausgewählt ist unter Halogen, C₁-C₆-Alkoxy und C₁-C₆-Acyloxy,
R¹ Wasserstoff oder Methyl bedeutet und
R² für Methyl steht, oder mit R¹ oder dem Molekülteil, an den die funktionelle Gruppe FG gebunden ist, einen C₅-C₆-Cycloalkylring bildet, R² auch Wasserstoff bedeuten kann, wenn die funktionelle Gruppe FG an ein aromatisches oder olefinisch ungesättigtes C-Atom gebunden ist,
die unter Polymerisationsbedingungen mit der Lewis-Säure ein Carbokation oder einen kationogenen Komplex bildet, wobei die organische Verbindung I ausgewählt ist unter Verbindungen der allgemeinen Formeln I-A bis I-D: 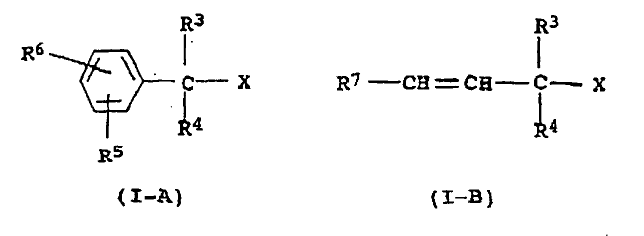 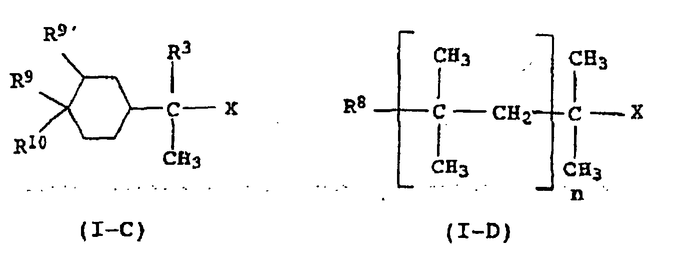 worin X die zuvor genannte Bedeutung hat,
n für 1, 2, 3, 4 oder 5 steht,
R³, R⁴ und R¹⁰ unabhängig voneinander für Wasserstoff oder Methyl stehen,
R⁵, R⁶ und R⁷ unabhängig voneinander für Wasserstoff, C₁-C₄-Alkyl oder eine Gruppe CR³R⁴-X, stehen, worin R³, R⁴ und X die zuvor genannten Bedeutungen haben und
R⁸ für Wasserstoff, Methyl oder ein Gruppe X steht und
R⁹ und R^{9'} Wasserstoff oder ein Gruppe X bedeutet.
in einem gegenüber der Lewis-Säure inerten organischen Lösungsmittel, **dadurch** gekentizeichnet, dass das Initiatorsystem zusätzlich
iii) wenigstens eine nicht polymerisierbare, aprotische siliziumorganische Verbindung II mit wenigstens einer si-o-Bindung umfasst.

2. Verfahren nach Anspruch 1, **dadurch gekennzeichnet, dass** die siliziumorganische Verbindung die allgemeine Formel II aufweist:
R^{a}ₙSi (OR^{b}) ₄₋ₙ (II)
worin n für 1, 2 oder 3 steht,
R^{a} gleich oder verschieden sein können und unabhängig voneinander C₁-C₂₀-Alkyl, C₅-C₇-Cycloalkyl, Aryl oder Aryl-C₁-C₄-alkyl bedeuten, wobei die drei letztgenannten Reste auch eine oder mehrere C₁-C₁₀-Alkylgruppen als Substituenten aufweisen können, und
R^{b} gleich oder verschieden sind und C₁-C₂₀-Alkyl bedeuten oder für n = 1 oder 2 zwei verschiedene Reste R^{b} gemeinsam auch eine 2- oder 3-gliedrige Alkylen-Einheit bilden können.

3. Verfahren nach einem der vorhergehenden Ansprüche, **dadurch gekennzeichnet, dass** die Lewis-Säure ausgewählt ist unter BF₃ TiCl₄, SnCl₄, BCl₃, FeCl₃, VCl₅, AlCl₃ und R^{c}-AlCl₂, worin R^{c} für C₁-C₆-Alkyl steht.

4. Verfahren nach Anspruch 3, **dadurch gekennzeichnet, dass** die Lewis-Säure ausgewählt ist unter TiCl₄ und BCl₃.

5. Verfahren nach einem der vorhergehenden Ansprüche, **dadurch gekennzeichnet, dass** das Molverhältnis von Siliziumatomen in der siliziumorganischen Verbindung II und (Halb)Metallatomen in der Lewis-Säure im Bereich von 0,05:1 bis 50:1 liegt.

6. Verfahren nach einem der vorhergehenden Ansprüche, **dadurch gekennzeichnet, dass** man die Verbindung I in einer Menge von 10⁻⁴ bis 10⁻¹ mol, bezogen auf die funktionellen Gruppen FG der Verbindung I, je mol polymerisierbare Monomere einsetzt.

7. Verfahren nach einem der vorhergehenden Ansprüche, **dadurch gekennzeichnet, dass** man die Lewis-Säure und die Verbindung I in einem Molverhältnis im Bereich von 20:1 bis 1:50, bezogen auf die funktionellen Gruppen FG, einsetzt.

8. Verfahren nach einem der vorhergehenden Ansprüche, **dadurch gekennzeichnet, dass** man die Polymerisation bei Temperaturen unterhalb. 0°C durchführt.

9. Verfahren nach einem der vorhergehenden Ansprüche, **dadurch gekennzeichnet, dass** das Lösungsmittel ausgewählt ist unter aliphatischen und cycloaliphatischen Kohlenwasserstoffen, aromatischen Kohlenwasserstoffen sowie inerten Halogenkohlenwasserstoffen.

10. Verfahren nach einem der vorhergehenden Ansprüche, **dadurch gekennzeichnet, dass** man Isobuten mit wenigstens einem vinylaromatischen Monomer copolymerisiert.

11. verfahren nach Anspruch 10, **dadurch gekennzeichnet, dass** man zunächst Isobuten und anschließend das vinylaromatisehe Monomer polymerisiert.

12. Verfahren nach einem der vorhergehenden Ansprüche, **dadurch gekennzeichnet, dass** man die Polymerisation durch Zugabe einer protischen Verbindung abbricht.

13. Verfahren nach einem der Ansprüche 1 bis 11, **dadurch gekennzeichnet, dass** man die Polymerisation durch Zugabe einer Tri(alkyl)allylsilan-verbindung abbricht.

14. Verwendung von siliziumorganischen Verbindungen II, wie in Anspruch 1 oder 2 definiert, als Donoren für die lebende kationische Polymerisation von Isobuten oder Mischungen von Isobuten mit ethylenisch ungesättigten Comonomeren.

## Claims

1. A process for the preparation of homo- and copolymers of isobutene by cationic polymerization of isobutene or mixtures of isobutene with ethylenically unsaturated comonomers in the presence of an initiator system comprising:
i) a Lewis acid selected from covalent metal-halogen compounds and covalent semimetal-halogen compounds,
ii) at least one aprotic organic compound I having at least one functional group FG of the formula 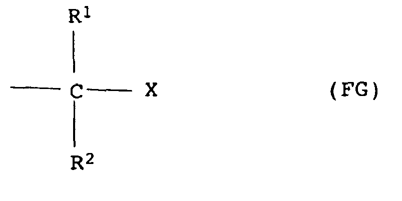 where
X is selected from halogen, C₁-C₆-alkoxy and C₁-C₆-acyloxy,
R¹ is hydrogen or methyl and
R² is methyl or, with R¹ or the moiety to which the functional group FG is bonded, forms a C₅- or C₆-cycloalkyl ring, it also being possible for R² to be hydrogen when the functional group FG is bonded to an aromatic or olefinically unsaturated carbon atom,
which, under polymerization conditions, forms a carbocation or cationic complex with the Lewis acid,
the organic compound I being selected from compounds of the general formulae I-A to I-D: 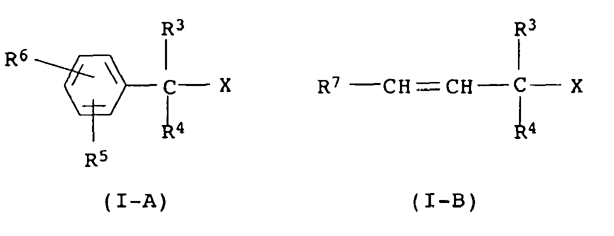 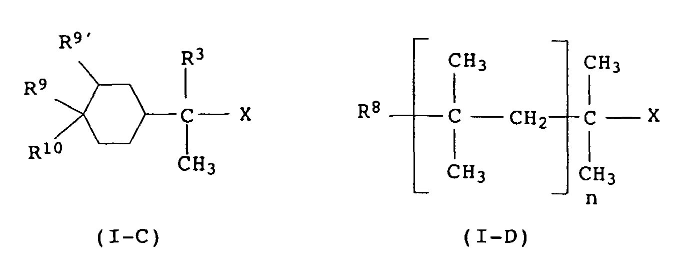 where X has the abovementioned meanings,
n is 1, 2, 3, 4 or 5,
R³, R⁴ and R¹⁰, independently of one another, are each hydrogen or methyl,
R⁵, R⁶ and R⁷, independently of one another, are each hydrogen, C₁-C₄-alkyl or a group CR³R⁴-X, where R³, R⁴ and X have the abovementioned meanings, and
R⁸ is hydrogen, methyl or a group X and
R9 and R^{9'} are each hydrogen or a group X,
in an organic solvent which is inert to the Lewis acid, wherein the initiator system additionally comprises
iii) at least one nonpolymerizable, aprotic organosilicon compound II having at least one Si-O bond.

2. The process according to claim 1, wherein the organosilicon compound is of the formula II:
R^{a}ₙSi(OR^{b})₄₋ₙ (II)
where n is 1, 2 or 3,
R^{a} may be identical or different and, independently of one another, are each C₁-C₂₀-alkyl, C₅-C₇-cycloalkyl, aryl or aryl-C₁-C₄-alkyl, it being possible for the three last-mentioned radicals also to have one or more C₁-C₁₀-alkyl groups as substituents, and
R^{b} are identical or different and are each C₁-C₂₀-alkyl or, where n = 1 or 2, two different radicals R^{b} together may also form a 2- or 3-membered alkylene unit.

3. The process according to either of the preceding claims, wherein the Lewis acid is selected from BF₃ TiCl₄, SnCl₄, BCl₃, FeCl₃, VCl₅, AlCl₃ and R^{c}-AlCl₂, where R^{C} is C₁-C₆-alkyl.

4. The process according to claim 3, wherein the Lewis acid is selected from TiCl₄ and BCl₃.

5. The process according to any of the preceding claims, wherein the molar ratio of silicon atoms in the organosilicon compound II to (semi)metal atoms in the Lewis acid is from 0.05:1 to 50:1.

6. The process according to any of the preceding claims, wherein the compound I is used in an amount of from 10⁻⁴ to 10⁻¹ mol, based on the functional groups FG of the compound I, per mol of polymerizable monomer.

7. The process according to any of the preceding claims, wherein the Lewis acid in the compound I are used in a molar ratio of from 20:1 to 1:50, based on the functional groups FG.

8. The process according to any of the preceding claims, wherein the polymerization is carried out at below 0°C.

9. The process according to any of the preceding claims, wherein the solvent is selected from aliphatic and cycloaliphatic hydrocarbons, aromatic hydrocarbons and inert halohydrocarbons.

10. The process according to any of the preceding claims, wherein isobutene is copolymerized with at least one vinylaromatic monomer.

11. The process according to claim 10, wherein first isobutene and then the vinylaromatic monomer are polymerized.

12. The process according to any of the preceding claims, wherein the polymerization is stopped by adding a protic compound.

13. The process according to any of claims 1 to 11, wherein the polymerization is stopped by adding a tri(alkyl)allylsilane compound.

14. The use of organosilicon compounds II, as defined in claim 1 or 2, as donors for the living cationic polymerization of isobutene or mixtures of isobutene with ethylenically unsaturated comonomers.

## Revendications

1. Procédé de préparation d'homopolymères et de copolymères de l'isobutène par polymérisation cationique d'isobutène ou de mélanges d'isobutène avec des comonomères éthyléniquement insaturés, en présence d'un système d'amorceur, comprenant :
i) un acide de Lewis choisi parmi des composés covalents de métal-halogène et des composés covalents de semi-métal-halogène,
ii) au moins un composé organique aprotique I comportant au moins un groupe fonctionnel FG de la formule : 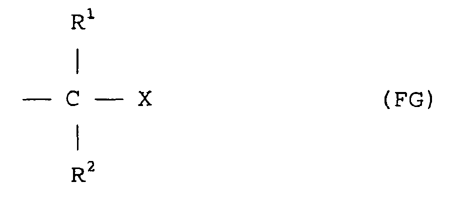 dans laquelle
X est choisi parmi de l'halogène et un groupe alcoxy en C₁-C₆ et acyloxy en C₁-C₆,
R¹ représente de l'hydrogène ou du méthyle, et
R² représente du méthyle, ou forme avec R¹ ou la partie de molécule sur laquelle le groupe fonctionnel FG est fixé, un noyau de cycloalkyle en C₅-C₆, R² pouvant aussi représenter de l'hydrogène lorsque le groupe fonctionnel FG est fixé sur un atome de C aromatique ou oléfiniquement insaturé,
qui, dans des conditions de polymérisation, forme avec l'acide de Lewis un carbocation ou un complexe cationogène, le composé organique I étant choisi parmi des composés des formules générales I-A à I-D : 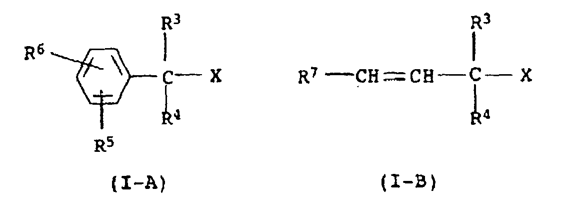 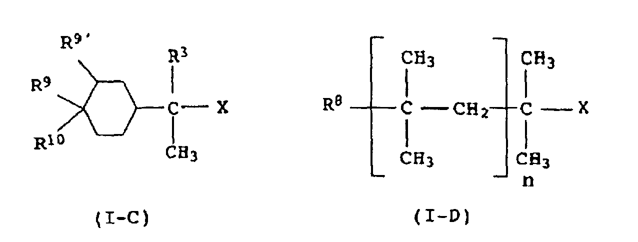 où X a la signification donnée précédemment,
n vaut 1, 2, 3, 4 ou 5,
R³, R⁴ et R¹⁰ représentent, indépendamment l'un de l'autre, de l'hydrogène ou du méthyle,
R⁵, R⁶ et R⁷ représentent, indépendamment l'un de l'autre, de l'hydrogène ou un groupe alkyle en C₁-C₄ ou CR³R⁴-X, où R³, R⁴ et X ont les significations données précédemment, et
R⁸ représente de l'hydrogène, du méthyle ou un groupe X, et
R⁹ et R^{9'} représentent de l'hydrogène ou un groupe X,
dans un solvant organique inerte vis-à-vis de l'acide de Lewis, **caractérisé en ce que** le système d'amorceur comporte en supplément
iii) au moins un composé II organosilicique, aprotique, non polymérisable, comprenant au moins une liaison Si-O.

2. Procédé suivant la revendication 1, **caractérisé en ce que** le composé organosilicique présente la formule générale II :
R^{a}ₙSi(OR^{b})₄₋ₙ (II)
dans laquelle n vaut 1, 2 ou 3,
R^{a} peuvent être identiques ou différents et représenter indépendamment l'un de l'autre un groupe alkyle en C₁-C₂₀, cycloalkyle en C₅-C₇, aryle ou aryl-C₁-C₄-alkyle, les trois radicaux cités en dernier lieu pouvant aussi présenter un ou plusieurs groupes alkyle en C₁-C₁₀, comme substituants, et
R^{b} sont identiques ou différents et représentent un groupe alkyle en C₁-C₂₀ ou, dans le cas où n=1 ou 2, deux radicaux différents R^{b} peuvent former conjointement également une unité alkylène à 2 ou 3 termes.

3. Procédé suivant l'une des revendications précédentes, **caractérisé en ce que** l'acide de Lewis est choisi parmi BF₃, TiCl₄, SnCl₄, BCl₃, FeCl₃, VCl₅, AlCl₃ et R^{c}-AlCl₂, où R^{C} représente un groupe alkyle en C₁-C₆.

4. Procédé suivant la revendication 3, **caractérisé en ce que** l'acide de Lewis est choisi parmi TiCl₄ et BCl₃.

5. Procédé suivant l'une des revendications précédentes, **caractérisé en ce que** le rapport molaire entre les atomes de silicium dans le composé organosilicique II et les atomes de (semi)-métal dans l'acide de Lewis est de l'ordre de 0,05/1 à 50/1.

6. Procédé suivant l'une des revendications précédentes, **caractérisé en ce qu'**on met en oeuvre le composé I en une quantité de 10⁻⁴ à 10⁻¹ mole, rapportée aux groupes fonctionnels FG du composé I, par mole de monomère polymérisable.

7. Procédé suivant l'une des revendications précédentes, **caractérisé en ce qu'**on met en oeuvre l'acide de Lewis et le composé I dans un rapport molaire de l'ordre de 20/1 à 1/50, rapporté aux groupes fonctionnels FG.

8. Procédé suivant l'une des revendications précédentes, **caractérisé en ce qu'**on effectue la polymérisation à des températures en dessous de 0°C.

9. Procédé suivant l'une des revendications précédentes, **caractérisé en ce que** le solvant est choisi parmi des hydrocarbures aliphatiques et cycloaliphatiques, des hydrocarbures aromatiques ainsi que des hydrocarbures halogénés inertes.

10. Procédé suivant l'une des revendications précédentes, **caractérisé en ce qu'**on copolymérise de l'isobutène avec au moins un monomère vinyl-aromatique.

11. Procédé suivant la revendication 10, **caractérisé en ce qu'**on polymérise tout d'abord de l'isobutène et ensuite le monomère vinyl-aromatique.

12. Procédé suivant l'une des revendications précédentes, **caractérisé en ce qu'**on interrompt la polymérisation par addition d'un composé protique.

13. Procédé suivant l'une des revendications 1 à 11, **caractérisé en ce qu'**on interrompt la polymérisation par addition d'un composé de tri (alkyl) allylsilane.

14. Utilisation de composés organosiliciques II, tels que définis dans la revendication 1 ou 2, comme donneurs pour la polymérisation cationique vivante d'isobutène ou de mélanges d'isobutène avec des comonomères éthyléniquement insaturés.
